(19) **Europäisches Patentamt / European Patent Office / Office européen des brevets**

(11) **EP 4 625 137 A1**

(12) **EUROPEAN PATENT APPLICATION**
published in accordance with Art. 153(4) EPC

(43) Date of publication:
**01.10.2025 Bulletin 2025/40**

(21) Application number: **23893975.5**

(22) Date of filing: **23.11.2023**

(51) International Patent Classification (IPC):
*G06F 3/14* (2006.01)

(52) Cooperative Patent Classification (CPC):
**G06F 3/14; G06T 7/70; G06V 40/16; G06V 40/18**

(86) International application number:
**PCT/CN2023/133713**

(87) International publication number:
**WO 2024/109886 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 CN 202211489042**

(71) Applicant: **Beijing Co Wheels Technology Co., Ltd Beijing 101300 (CN)**

(72) Inventor: **WEI, Tao Beijing 101300 (CN)**

(74) Representative: **Regimbeau 20, rue de Chazelles 75847 Paris Cedex 17 (FR)**

(54) **INFORMATION DISPLAY METHOD AND APPARATUS, DEVICE, STORAGE MEDIUM, AND VEHICLE**

(57) Disclosed are an information display method and apparatus, a device, a storage medium, a computer program product, a computer program, and a vehicle. The information display method comprises: acquiring a face image of a target user; performing face feature detection on the face image to determine face feature information and eye feature information of the target user, the eye feature information comprising target coordinate information corresponding to the eye position of the target user; determining whether the face feature information matches preset feature information; when the face feature information matches the preset feature information, determining a target projection position according to a correspondence between the target coordinate information and a projection position of a display system; and controlling the display system to perform information display in an area corresponding to the target projection position.

Acquire a facial image of a target user, wherein the facial image comprises a facial image of the target user during driving — S110

Perform facial feature detection on the facial image to determine facial feature information and eye feature information of the target user, wherein the facial feature information comprises data information representing a facial orientation of the target user, and the eye feature information comprises target coordinate information corresponding to eye positions of the target user — S120

Determine whether the facial feature information matches preset feature information, wherein the preset feature information comprises data information representing that the facial orientation of the target user is directed toward a forward driving direction — S130

In a case where the facial feature information matches the preset feature information, determine a target projection position according to a correspondence between the target coordinate information and a projection position of a display system — S140

Control the display system to display information in an area corresponding to the target projection position — S150

**FIG. 1**

EP 4 625 137 A1

**Description**

CROSS-REFERENCE TO RELATED APPLICATIONS

The present application claims priority of Chinese Patent Application No. 202211489042.7, filed on November 25, 2022, the content of which is hereby incorporated by reference in its entirety.

TECHNICAL FIELD

The present disclosure relates to the technical field of information display, and in particular to a method and an apparatus for displaying information, a device, a storage medium, a computer program product, a computer program, and a vehicle.

BACKGROUND

A Head Up Display (HUD), alternatively referred to as a flat visual display, can map status information such as fuel consumption, fuel amount, speed, mileage, time, map navigation, etc. of a traffic transportation such as a vehicle, a ship, an aircraft, etc. to the glass in front of the cockpit, so that a user can see the status information of the traffic transportation without looking down. Typically, a projection position of the HUD needs to change as the gesture of the user changes. Thus, the HUD typically has multiple adjustable gears.

In the prior art, the gear of the HUD is conventionally adjusted through manual turning of an adjustment button by the user. However, since the number of the adjustable gears of HUD is relatively large, the efficiency of manual adjustment is low. Moreover, every time the user changes a driving gesture, an adjustment is required, and the operation is cumbersome. In addition, if the user needs to adjust the HUD during driving, manual adjustment may cause driving safety problems due to distracting the attention of the user.

SUMMARY

Embodiments of the present disclosure provide an method and an apparatus for displaying information, a device, a storage medium, a computer program product, a computer program, and a vehicle, which can automatically and timely adjust a projection position of a display system according to an actual gesture of a target user, thereby improving a driving experience of the target user during driving and ensuring driving safety of the target user.

An embodiment of the first aspect of the present disclosure provides a method for displaying information. The method includes the following operations.

A facial image of a target user is acquired. The facial image includes a facial image of the target user during driving.

Facial feature detection is performed on the facial image to determine facial feature information and eye feature information of the target user. The facial feature information includes data information representing a facial orientation of the target user, and the eye feature information includes target coordinate information corresponding to eye positions of the target user.

Whether the facial feature information matches preset feature information is determined. The preset feature information includes data information representing that the facial orientation of the target user is directed toward a forward driving direction.

In a case where the facial feature information matches the preset feature information, a target projection position is determined according to a correspondence between the target coordinate information and a projection position of a display system.

The display system is controlled to display information in an area corresponding to the target projection position.

In some embodiments, the facial feature information includes multiple pieces of first coordinate information respectively corresponding to multiple first facial feature points, the preset feature information includes multiple pieces of second coordinate information respectively corresponding to multiple second facial feature points in a standard three-dimensional (3D) face model, and the multiple first facial feature points correspond to the multiple second facial feature points one-to-one.

The operation of determining whether the facial feature information matches the preset feature information includes the following operations.

The multiple pieces of first coordinate information respectively corresponding to the multiple first facial feature points are mapped into the standard 3D face model.

Facial orientation angles of the target user are determined according to the multiple pieces of first coordinate information and the multiple pieces of second coordinate information respectively corresponding to the multiple pieces of first coordinate information. The facial orientation angles include a roll angle, a pitch angle, and a yaw angle.

In a case where the roll angle, the pitch angle, and the yaw angle are all less than a preset angle, it is determined that the facial feature information matches the preset feature information.

**In** some embodiments, the operation of determining the facial orientation angles of the target user according to the multiple pieces of first coordinate information and the multiple pieces of second coordinate information respectively corresponding the multiple pieces of first coordinate information includes the following operations.

The multiple pieces of first coordinate information are compared with the multiple pieces of second coordinate information corresponding to the multiple pieces of first coordinate information, respectively.

**In** a case where differences between the multiple pieces of first coordinate information and the multiple pieces of second coordinate information corresponding to the multiple pieces of first coordinate information are all less than a preset threshold value, it is determined that the roll angle, the pitch angle, and the yaw angle are all less than the preset angle.

In some embodiments, the operation of determining the target projection position according to the correspondence between the target coordinate information and the projection position of the display system includes the following operations.

A target gear is determined according to a correspondence between the target coordinate information and an adjustable gear of the display system.

A projection position corresponding to the target gear is determined as the target projection position.

In some embodiments, before determining the target projection position according to the correspondence between the target coordinate information and the projection position of the display system, the method further includes the following operations.

A mapping relationship between the multiple adjustable gears and multiple pieces of eye position information is acquired.

The mapping relationship is fitted through a linear regression algorithm to obtain a multiple linear regression equation. The multiple linear regression equation is used to represent a correspondence between the multiple pieces of eye position information and the multiple adjustable gears of the display system.

In some embodiments, the target coordinate information includes left-eye coordinate information and right-eye coordinate information. The operation of determining the target gear according to the correspondence between the target coordinate information and the adjustable gear of the display system includes the following operation.

The left-eye coordinate information and the right-eye coordinate information are substituted into the multiple linear regression equation, respectively, to obtain the target gear by calculating.

In some embodiments, the operation of acquiring the mapping relationship between the multiple adjustable gears and the multiple pieces of eye position information includes the following operations.

Multiple facial images are acquired. The multiple facial images have different face position information.

Eye position detection is performed on the multiple facial images respectively, to obtain the multiple pieces of eye position information.

The multiple adjustable gears corresponding to the multiple pieces of eye position information are recorded respectively, to obtain the mapping relationship between the multiple adjustable gears and the multiple pieces of eye position information.

In some embodiments, the operation of acquiring the facial image of the target user includes the following operations.

The first input of the target user for adjusting a gesture is received.

In response to the first input, the facial image of the target user is acquired.

An embodiment of the second aspect of the present disclosure provides an apparatus for displaying information. The apparatus includes the first acquisition module, a detection module, the first determining module, the second determining module, and a control module.

The first acquisition module is configured to acquire a facial image of a target user. The facial image includes a facial image of the target user during driving.

The detection module is configured to perform facial feature detection on the facial image to determine facial feature information and eye feature information of the target user. The facial feature information includes data information representing a facial orientation of the target user, and the eye feature information includes target coordinate information corresponding to eye positions of the target user.

The first determining module is configured to determine whether the facial feature information matches preset feature information. The preset feature information includes data information representing that the facial orientation of the target user is directed toward a forward driving direction.

The second determining module is configured to determine a target projection position according to a correspondence between the target coordinate information and a projection position of a display system in a case where the facial feature information matches the preset feature information.

The control module is configured to control the display system to display information in an area corresponding to the target projection position.

An embodiment of the third aspect of the present disclosure provides an electronic device. The electronic device includes a processor and a memory. The memory is configured to store computer program instructions.

The processor is configured to implement the method for displaying information according to the embodiment of the first aspect when executing the computer program instructions.

An embodiment of the fourth aspect of the present disclosure provides a computer readable storage medium having computer program instructions stored thereon, and when the computer program instructions are executed by a processor, the method for displaying information according to the embodiment of the first aspect is implemented.

An embodiment of the fifth aspect of the present disclosure provides a computer program product. When instructions in the computer program product are executed by a processor, the method for displaying information according to the embodiment of the first aspect is performed.

An embodiment of the sixth aspect of the present disclosure provides a computer program including computer program code. When the computer program code is executed on a computer, the computer performs the method for displaying information according to the embodiment of the first aspect.

An embodiment of the seventh aspect of the present disclosure provides a vehicle. The vehicle includes at least one of: the apparatus for displaying information according to the embodiment of the second aspect; the electronic device according to the embodiment of the third aspect; the computer readable storage medium according to the embodiment of the fourth aspect; the computer program product according to the embodiment of the fifth aspect; or the computer program according to the embodiment of the sixth aspect.

In the method and apparatus for displaying information, the device, the storage medium, the computer program product, the computer program, and the vehicle according to the embodiments of the present disclosure, the facial orientation and the eye positions of the target user can be determined in real time by acquiring the facial image of the target user in real time and performing facial feature detection on the facial image. The change of the gesture of the target user will cause the change of the eye positions, and only in a case that the eye positions match the projection position of the display system, the target user can see clear and complete information. Therefore, the projection position of the display system can be adjusted timely according to the latest eye positions by determining the target projection position according to the correspondence between the target coordinates and the projection position of the display system. Whether projection is required is determined intelligently by determining the target projection position in a case that the facial feature information matches the preset feature information, that is, in a case that the target user is directed toward a forward driving direction, thereby avoiding waste of resources. The target user in any gesture can see clear and complete information by controlling the display system to display information in the area corresponding to the target projection position. As described above, according to the embodiments of the present disclosure, the projection position of the display system can be automatically and timely adjusted according to the actual gesture of the target user, thereby improving the driving experience of the target user during the driving process and ensuring the driving safety of the target user.

BRIEF DESCRIPTION OF THE DRAWINGS

In order to more clearly explain the technical solutions of the embodiments of the present disclosure, the accompanying drawings that need to be used in the embodiments of the present disclosure are briefly introduce below, and other accompanying drawings may be obtained from these accompanying drawings without making creative efforts for those skilled in the art.

FIG. 1 is a schematic flowchart of a method for displaying information according to an embodiment of the present disclosure.
FIG. 2 is a schematic flowchart of another method for displaying information according to an embodiment of the present disclosure.
FIG. 3 is a schematic structural diagram of an apparatus for displaying information according to an embodiment of the present disclosure.
FIG. 4 is a schematic structural diagram of an electronic device according to an embodiment of the present disclosure.

DETAILED DESCRIPTION

In order to enable a clearer understanding of the above objects, features, and advantages of the present disclosure, solutions of the present disclosure will be further described below. It is to be noted that the embodiments of the present disclosure and the features in the embodiments may be combined with each other without conflict.

Numerous specific details are set forth in the following description to facilitate a full understanding of the present disclosure, but the present disclosure may be implemented in other manners different from the manner described herein. It is apparent that the embodiments in the description are only some embodiments of the present disclosure, but not all embodiments.

It should be noted that, herein, relational terms such as "first" and "second" are used merely to distinguish one entity or operation from another entity or operation, and it is not required necessarily or implied that there is any such actual relationship or order between the entities or operations. Moreover, the term "comprising" or any other variation thereof is intended to encompass a non-exclusive inclusion, such that a process, method, article, or device that includes a series of elements includes not only those elements but also other elements that are not explicitly listed, or elements inherent to such a process, method, article, or device. Without further limitation, an element defined by the statement "comprising a..." does not preclude the presence of additional identical elements in a process, method, article, or device including the element.

Generally, the HUD may be applied to a traffic transportation requiring manual driving, such as an aircraft, a vehicle, and a ship, and may also be applied to a machine for simulating traffic training, a device for testing traffic transportation, and the like, which is not limited herein. The above traffic transportation, the machine, the device, and the like may include a processor and/or an In-Vehicle Infotainment System (IVIS), and the following method for displaying information may be implemented by the processor and/or the IVIS.

Under normal circumstances, the HUD has multiple adjustable gears. The projection position of a graphical interface of the HUD on the screen can be controlled by controlling the orientation of the rotating shaft inside the gear. On the other hand, the projection position of the HUD is closely related to the position of the human eyes. If the height of the human eyes is at an appropriate position, the driver can see the complete picture of the HUD. On the contrary, if the height of the human eyes is at an inappropriate position, the driver will find an offset of the HUD or find that the HUD is invisible. The height of human eyes will change with the change of the sitting gesture of the driver. Therefore, the key to realize adaptive matching of the HUD is to realize the mapping relationship between the heights of the human eyes under various gestures and the adjustable gears of the HUD.

Thus, in order to solve the problems in the prior art, the embodiments of the present disclosure provide a method and an apparatus for displaying information, a device, a storage medium, a computer program product, a computer program, and a vehicle.

First, a method for displaying information according to an embodiment of the first aspect of the present disclosure will be described below. Here, the method for displaying information may be applied to the processor or the IVIS.

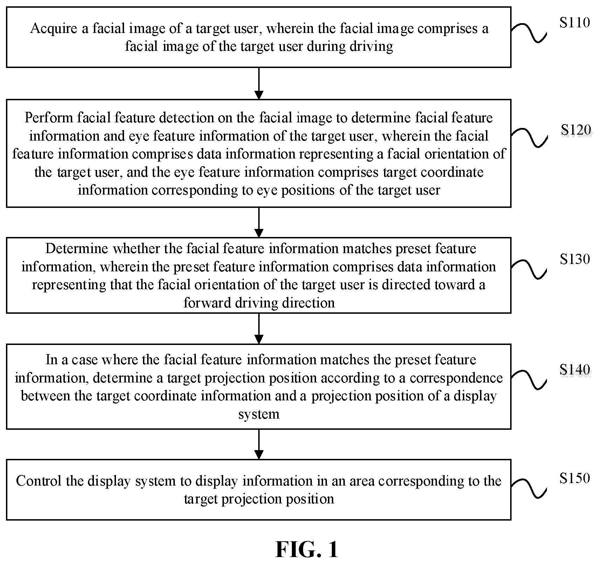

FIG. 1 illustrates a schematic flowchart of a method for displaying information according to the embodiments of the present disclosure. As illustrated in FIG. 1, the method for displaying information according to the embodiments of the present disclosure includes the following operations S110 to S150.

In operation S110, a facial image of a target user is acquired. The facial image includes a facial image of the target user during driving.

In operation S120, facial feature detection is performed on the facial image to determine facial feature information and eye feature information of the target user. The facial feature information includes data information representing a facial orientation of the target user, and the eye feature information includes target coordinate information corresponding to eye positions of the target user.

In operation S130, whether the facial feature information matches the preset feature information is determined. The preset feature information includes data information representing that the facial orientation of the target user is directed toward a forward driving direction.

In operation S140, in a case where the facial feature information matches the preset feature information, the target projection position is determined according to a correspondence between the target coordinate information and a projection position of a display system.

In operation S150, the display system is controlled to display information in an area corresponding to the target projection position.

In the method for displaying information according to the embodiments of the present disclosure, the facial orientation and the eye positions of the target user can be determined in real time by acquiring the facial image of the target user in real time and performing facial feature detection on the facial image. The change of the gesture of the target user will cause the change of the eye positions, and only in a case that the eye positions match the projection position of the display system, the target user can see clear and complete information. Therefore, the projection position of the display system can be adjusted timely according to the latest eye positions by determining the target projection position according to the correspondence between the target coordinate information and the projection position of the display system. Whether projection is required is determined intelligently by determining the target projection position in a case that the facial feature information matches the preset feature information, that is, in a case that the target user is directed toward a forward driving direction, thereby avoiding waste of resources. The target user in any gesture can see clear and complete information by controlling the display system to display information in the area corresponding to the target projection position. As described above, according to the embodiments of the present disclosure, the projection position of the display system can be automatically and timely adjusted according to the actual gesture of the target user, thereby improving the driving experience of the target user during the driving process and ensuring the driving safety of the target user.

Specific implementation manners of each of the above operations are described below.

In some embodiments, in the operation S110, the target user may be a driver of traffic transportation, a trainer of a simulated traffic training machine, a tester of a traffic transportation testing device, or the like, which is not limited herein. The facial image of the target user may be captured by a camera that specially captures the face of the target user, or may be obtained by cropping a full-body image or an upper-body image of the target user.

Based on this, in order to obtain the facial image of the target user, in some embodiments, the above operation S110 may specifically include the following operations.

The first image captured by a camera is acquired.

An image, corresponding to a position region where the target user is located, in the first image, is cropped to obtain a target user image.

Face detection is performed on the target user image to determine a face region in the target user image.

The face region in the target user image is cropped to obtain the facial image.

Here, the camera may be installed in the cockpit, and the first image may be an image including the position region where the target user is located. In the first image, the position region where the target user is located may be determined according to preset coordinates, and then the image corresponding to the position region where the target user is located may be cropped to obtain the target user image. The target user image may be a full-body image of the target user or an upper-body image of the target user, which is not limited herein. After obtaining the target user image, a face detection algorithm based on deep learning technology may be used to perform face detection on the target user image, to determine the face region in the target user image.

Specifically, when the HUD is applied to a vehicle, the camera may be an in-vehicle camera, and the in-vehicle camera may be installed in the cabin of the vehicle. The position region where the target user is located may be the position region where the driver is located. In this way, in the first image, the position region where the driver is located may be determined according to the preset coordinates corresponding to the position region where the driver is located, and then the image corresponding to the position region where the driver is located may be cropped to obtain the target user image.

In this way, after the face region is determined, the facial image of the target user may be obtained by cropping the face region in the target user image.

Based on this, in order to realize the adaptive adjustment of the HUD, in some embodiments, the above operation S110 may specifically further include the following operations.

The second input to the display system from the target user is received.

In response to the second input, the facial image of the target user is acquired.

Here, the second input may be at least one of: a voice instruction, a touch instruction, and a gesture instruction. Specifically, the second input may be, for example, an operation that the target user presses the HUD adaptive adjustment button. After having received the second input, the facial image of the target user is acquired, and a target projection position is determined based on the facial image, thereby realizing adaptive adjustment of the HUD.

Thus, adaptive adjustment of the HUD can be achieved by receiving the second input to the display system from the target user.

In some embodiments, in the operation S120, the facial feature information may include coordinates respectively corresponding to the multiple facial feature points, and may further include relative positions among the multiple facial feature points. The facial feature points may be facial key points. The facial feature points may include, for example, eye key points, a lip key point, an eyebrow key point, a nose key point, and the like. The key points of each part may include more than one key point. Based on this, the preset feature information may include standard coordinates respectively corresponding to the multiple preset feature points, and may further include standard relative positions among the multiple preset feature points. The preset feature points may be preset standard feature points. Further, coordinates respectively corresponding to the multiple facial feature points and relative positions among the multiple facial feature points may be data information representing the facial orientation of the target user.

In some embodiments, a face key point detection algorithm based on deep learning technology may be used to perform facial feature point detection on the facial image, to obtain coordinates of multiple facial feature points.

Further, the eye positions may be center point positions of the human eyes, or may be preset eye positions. The eye positions may include a left-eye (LE) position and a right-eye (RE) position. Accordingly, the target coordinate information corresponding to the eye positions may be the target coordinate information corresponding to the center point positions of the human eyes, or may be the target coordinate information corresponding to the preset eye positions. The target coordinate information corresponding to the center point positions of the human eyes may include left-eye center point coordinates and right-eye center point coordinates. The target coordinate information corresponding to the preset eye positions may include preset left eye position coordinates and preset right eye position coordinates.

In some embodiments, a face key point detection algorithm based on deep learning technology may be used to perform the eye position detection on the facial image, thereby realizing the positioning of the human eye positions and obtaining the human eye positions, i.e., LE position and RE position.

In some embodiments, the face key point detection algorithm based on deep learning technology may be used to perform the face key point detection on the facial image, thereby determining coordinates of human eye positions LE and RE, respectively.

In some embodiments, in the operation S130, the preset feature information may include data information representing that the facial orientation of the target user is directed toward a forward driving direction. Specifically, the preset feature information may include coordinate information respectively corresponding to multiple facial feature points in the standard three-dimensional (3D) face model.

In some embodiments, a camera that specially captures the facial image of the target user may be installed directly in front of the target user. If the camera can capture a complete facial image of the target user, it may be determined that the facial feature information matches the preset feature information. Specifically, the matching between the facial feature information and the preset feature information may be that, for example, the target user is directed toward a forward driving direction.

In order to accurately determine whether the facial feature information matches the preset feature information, in some embodiments, the facial feature information may include multiple pieces of first coordinate information respectively corresponding to multiple first facial feature points, the preset feature information may include multiple pieces of second coordinate information respectively corresponding to multiple second facial feature points in the standard 3D face model, and the multiple first facial feature points may correspond to the multiple second facial feature points one-to-one. Based on this, the above operation S130 may specifically include the following operations.

The multiple pieces of first coordinate information respectively corresponding to the multiple first facial feature points are mapped into the standard 3D face model.

Facial orientation angles of the target user are determined according to the multiple pieces of first coordinate information and the multiple pieces of second coordinate information respectively corresponding to the multiple pieces of first coordinate information. The facial orientation angles include a roll angle, a pitch angle, and a yaw angle.

In a case where the roll angle, the pitch angle, and the yaw angle are all less than a preset angle, it is determined that the facial feature information matches the preset feature information.

Here, the standard 3D face model may include multiple pieces of second coordinate information respectively corresponding to the multiple second facial feature points. Since the multiple first facial feature points may correspond to the multiple second facial feature points one-to-one, the facial orientation angles of the target user can be determined according to the differences between the multiple pieces of first coordinate information and the multiple pieces of second coordinate information respectively corresponding to the multiple pieces of first coordinate information, by mapping the multiple pieces of first coordinate information respectively corresponding to the multiple first facial feature points into the standard 3D face model. The facial orientation angles may include a pitch angle (P), a yaw angle (Y), and a roll angle (R).

Specifically, if the multiple pieces of first coordinate information are all overlapped with the multiple pieces of second coordinate information respectively corresponding to the multiple pieces of first coordinate information, it may be determined that the facial feature information matches the preset feature information. In the case that the multiple pieces of first coordinate information are all overlapped with the multiple pieces of second coordinate information respectively corresponding to the multiple pieces of first coordinate information, it may be determined that the pitch angle, the yaw angle, and the roll angle of the target user are all zero degrees. In a case that the multiple pieces of first coordinate information are not all overlapped with the multiple pieces of second coordinate information respectively corresponding to the multiple pieces of first coordinate information, the pitch angle, the yaw angle, and the roll angle of the target user may be determined according to the multiple pieces of first coordinate information and the multiple pieces of second coordinate information respectively corresponding to the multiple pieces of first coordinate information. If the roll angle, the pitch angle, and the yaw angle are all less than the preset angle, it may be determined that the facial feature information matches the preset feature information. That is, it may be determined that the facial orientation of the target user is directed toward a forward driving direction.

In this way, whether the facial feature information matches the preset feature information can be determined accurately in a case that the roll angle, the pitch angle, and the yaw angle are all less than the preset angle.

Based on this, in order to accurately determine the facial orientation angles of the target user, in some embodiments, the above operation of determining the facial orientation angles of the target user according to the multiple pieces of first coordinate information and the multiple pieces of second coordinate information respectively corresponding to the multiple pieces of first coordinate information may include the following operations.

The multiple pieces of first coordinate information are compared with the multiple pieces of second coordinate information corresponding to the multiple pieces of first coordinate information, respectively.

In a case where differences between the multiple pieces of first coordinate information and the multiple pieces of second coordinate information corresponding to the multiple pieces of first coordinate information are all less than a preset threshold value, it is determined that the roll angle, the pitch angle, and the yaw angle are all less than the preset angle.

Here, due to the one-to-one correspondence between the multiple first facial feature points and the multiple second facial feature points, the multiple pieces of first coordinate information may correspond to the multiple pieces of second coordinate information one-to-one. As described above, the difference of each group of coordinate information may be determined by respectively comparing the multiple pieces of first coordinate information with the multiple pieces of second coordinate information corresponding to the multiple pieces of first coordinate information. A group of coordinate information may include the first coordinate information and the second coordinate information corresponding to the first coordinate information. In this way, in a case that the differences of the multiple groups of coordinate information are all less than the preset threshold, it may be determined that the roll angle, the pitch angle, and the yaw angle of the target user are all less than the preset angle.

As described above, the facial orientation angles of the target user can be accurately determined by respectively comparing the multiple pieces of first coordinate information with the multiple pieces of second coordinate information corresponding to the multiple pieces of first coordinate information.

In some embodiments, in the operation S140, there may be a correspondence between the eye position information and the projection position of the display system. The correspondence may be in the form of a mapping table or a function analytical expression. In addition, the display system may be a HUD.

**In** some embodiments, after the target coordinates are determined, the matching is performed between the target coordinate information and the eye position information in the mapping table. When the two values are the same, the projection position corresponding to the eye position information may be regarded as the target projection position.

In some embodiments, after the target coordinate information is determined, the target coordinates may be substituted into a function analytical expression between the eye position information and the projection position of the display system, and the target projection position corresponding to the target coordinate information may be obtained by calculating.

It should be noted that, in the embodiments of the present disclosure, the target projection position is determined only in a case that the facial feature information matches the preset feature information. That is, if the facial feature information does not match the preset feature information, it may be determined that the target user is not directed toward a forward driving direction, and the target projection position may not be determined. Based on this, in order to adjust the projection position of the display system by adjusting the gear of the display system, in some embodiments, the above operation S140 may specifically include the following operations.

A target gear is determined according to a correspondence between the target coordinate information and an adjustable gear of the display system.

A projection position corresponding to the target gear is determined as the target projection position.

Here, the display system may have multiple adjustable gears, and each adjustable gear may correspond to a projection position. The correspondence between the eye position information and the adjustable gear of the display system may be in the form of a function analytical expression.

In some embodiments, after the target coordinate information corresponding to the eye positions is determined, the target coordinate information may be substituted into a function analytical expression between the eye position information and the adjustable gear of the display system, and the target gear corresponding to the target coordinate information may be obtained by calculating. Due to the one-to-one correspondence between the adjustable gears and the projection positions, the projection position corresponding to the target gear may be the target projection position.

As described above, the target gear corresponding to the target coordinate information is firstly determined, and then the target projection position corresponding to the target gear is determined, so that the projection position of the display system can be adjusted by adjusting the gear of the display system.

Based on this, in order to obtain a mapping formula between the eye position information and the adjustable gear of the display system, in some embodiments, the method may further include the following operations.

A mapping relationship between the multiple adjustable gears and the multiple pieces of eye position information is acquired.

The mapping relationship is fitted through a linear regression algorithm to obtain a multiple linear regression equation. The multiple linear regression equation is used to represent a correspondence between the multiple pieces of eye position information and the multiple adjustable gears of the display system.

Here, the eye position information may include a left-eye position coordinate and a right-eye position coordinate. The mapping relationship between the multiple adjustable gears and the multiple pieces of eye position information may be in the form of a mapping relationship table, and a large amount of mapping data may be stored in the mapping relationship table. After obtaining the mapping relationship table, a linear regression algorithm may be used to fit the mapping data in the mapping relationship table, to obtain a mapping formula, that is, a multiple linear regression equation, between the eye position information and the adjustable gear of the display system.

Specifically, the mapping formula may be, for example:

$$Y = aX_1 + bX_2$$

Here, Y may be an adjustable gear, $X_1$ may be a left-eye position coordinate, $X_2$ may be a right-eye position coordinate, and a and b may be specific values obtained by linear fitting.

In this way, the mapping formula between the eye position information and the adjustable gear of the display system may be obtained through fitting the mapping relationship by using a linear regression algorithm.

In order to obtain the target gear by calculating, in some embodiments, the target coordinate information may include left-eye coordinate information and right-eye coordinate information. Based on this, the operation of determining the target gear according to the correspondence between the target coordinate information and the adjustable gear of the display system specifically includes the following operation.

The left-eye coordinate information and the right-eye coordinate information are substituted into the multiple linear regression equation, respectively, to obtain the target gear by calculating.

Based on this, in order to obtain the mapping relationship between the multiple adjustable gears and the multiple pieces of eye position information, in some embodiments, the above operation of acquiring the mapping relationship between the multiple adjustable gears and the multiple pieces of eye position information may specifically include the following operations.

Multiple facial images are acquired. The multiple facial images have different face position information.

Eye position detection is performed on the multiple facial images respectively, to obtain the multiple pieces of eye position information.

The adjustable gears corresponding to the multiple pieces of eye position information are respectively recorded, to obtain the mapping relationship between the multiple adjustable gears and the multiple pieces of eye position information.

Here, the multiple facial images may be multiple facial images corresponding to the same user, multiple facial images corresponding to multiple users one-to-one, or multiple facial images corresponding to multiple users. In a case of multiple facial images corresponding to multiple users, the number of facial images corresponding to each user may not be limited.

In some embodiments, in order to obtain multiple facial images having different facial position information, multiple user images having different gestures may be acquired. Each gesture may correspond to one piece of face position information. The facial image may be obtained by performing face detection on the user image and cropping the detected face region. Every time a facial image is obtained, the left-eye position coordinates and the right-eye position coordinates corresponding to each facial image may be determined and recorded by using the face key point detection algorithm mentioned in the above embodiment. At the same time, the adjustable gear that conforms to the current eye position coordinates is recorded.

As described above, the mapping relationship between the multiple adjustable gears and the multiple pieces of eye position information can be obtained by respectively recording the multiple adjustable gears corresponding to the multiple eye position coordinates.

In some embodiments, in the operation S150, the information displayed in the area corresponding to the target projection position may include, for example, fuel consumption, fuel amount, speed, mileage, time, map navigation, and the like.

In order to improve the driving experience of the target user during the driving process and ensure the driving safety of the target user, the present disclosure further provides another implementation manner of the method for displaying information as another implementation of the present disclosure. For the specific details, the reference is made to the following embodiment.

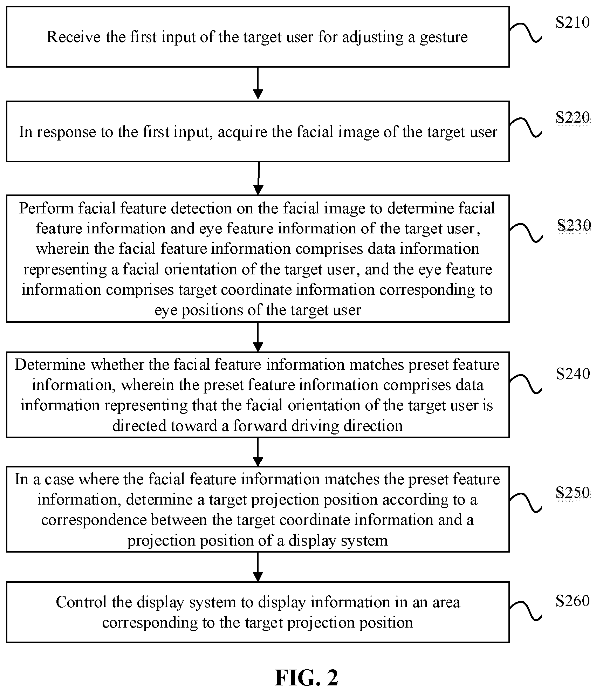

Referring to FIG. 2, the method for displaying information according to the embodiment of the present disclosure may further include the following operations S210 to S260.

In operation S210, the first input of the target user for adjusting a gesture is received.

In operation S220, in response to the first input, the facial image of the target user is acquired.

In operation S230, facial feature detection is performed on the facial image to determine facial feature information and eye feature information of the target user. The facial feature information includes data information representing the facial orientation of the target user, and the eye feature information includes target coordinate information corresponding to the eye positions of the target user.

In operation S240, whether the facial feature information matches the preset feature information is determined. The preset feature information includes data information representing that the facial orientation of the target user is directed toward a forward driving direction.

In operation S250, in a case where the facial feature information matches the preset feature information, a target projection position is determined according to a correspondence between the target coordinate information and a projection position of a display system.

In operation S260, the display system is controlled to display information in an area corresponding to the target projection position.

In the embodiment of the present disclosure, by initiating the adaptive adjustment of the display system in response to the first input of the target user to the display system, the projection position of the display system can be automatically and timely adjusted according to the actual gesture of the target user, thereby improving the driving experience of the target user and ensuring the driving safety of the target user during the driving process of the target user.

Specific implementation manners of each of the above operations are described below.

In some embodiments, in the operation S210, the first input may be an instruction from the user to actively change the gesture, or may be an instruction from the user to press the seat adjustment button.

In some embodiments, in the operation S220, the facial image of the target user may be acquired once every time the target user adjusts the gesture, and then the target projection position may be determined in a case that the new facial feature information matches the preset feature information, and the display system may be controlled to display the information in the area corresponding to the target projection position.

In addition, for other operations S230 to S260 of the method in the embodiment of the present disclosure, the reference is made to the related description of operations S120 to S150 in the embodiment illustrated in FIG. 1 above, which will not be detailed repeatedly here.

In order to better describe the entire solution, some specific examples are given based on the above embodiments.

For example, the specific process for implementing the adaptive adjustment of the HUD may be as follows.

In operation S1, the first image captured by an in-cabin camera is acquired, and a position region where the driver is located in the first image is cropped according to predetermined image coordinates, to obtain a driver image.

In operation S2, a face detection algorithm based on deep learning technology is used to perform face detection on the driver image, to determine the face position region in the driver image, and to obtain the facial image by cropping.

In operation S3, a face key point detection algorithm based on deep learning technology is used to perform facial feature point detection on the facial image. The facial feature points include eye positions. Thus, coordinates of multiple facial feature points (including target coordinates corresponding to eye positions) may be obtained.

In operation S4, a 3D face model corresponding to the facial image is constructed based on the coordinates of the multiple facial feature points, and the facial orientation of the driver is determined based on the coordinates of the multiple facial feature points in the 3D face model.

In operation S5, in a case that the facial orientation of the driver is directed toward a forward driving direction, the target coordinate is substituted into a mapping formula between the eye position coordinates and the adjustable gears of the HUD, to obtain the target gear by calculating.

In operation S6, the gear is adjusted by the HUD system to the target gear, to adjust the projection position of the HUD to the target projection position, thereby realizing adaptive adjustment of the HUD.

As a result, the projection position of the HUD can be automatically and timely adjusted according to the actual driving gesture of the driver, thereby improving the driving experience of the driver and ensuring the driving safety of the driver.

Based on the method for displaying information provided by the above embodiments, accordingly, the embodiment of the second aspect of the present disclosure further provides a specific implementation manner of the apparatus for displaying information. For the specific details, the reference is made to the following embodiment.

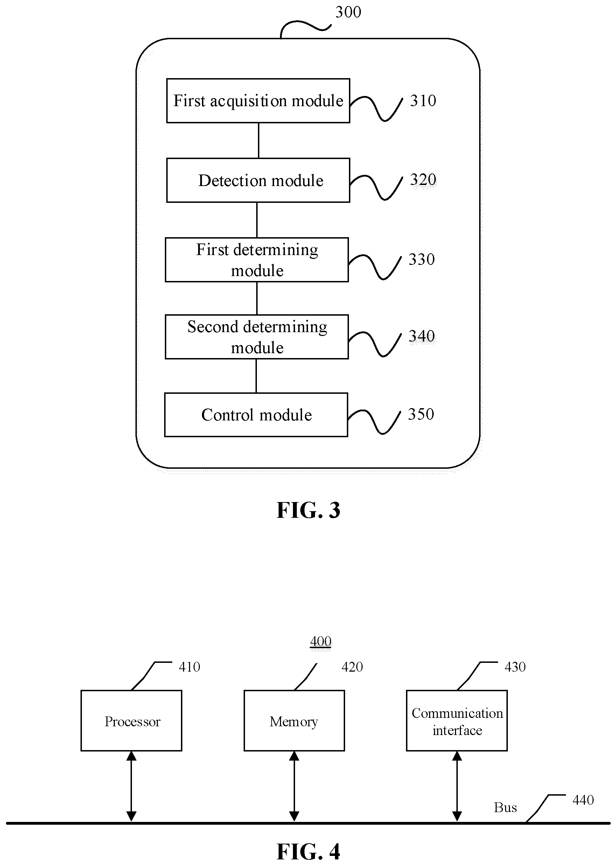

As illustrated in FIG. 3, the apparatus 300 for displaying information according to an embodiment of the present disclosure includes the following modules: the first acquisition module 310, the detection module 320, the first determining module 330, the second determining module 340 and a control module 350.

The first acquisition module 310 is configured to acquire a facial image of a target user. The facial image includes a facial image of the target user during driving.

The detection module 320 is configured to perform facial feature detection on the facial image to determine facial feature information and eye feature information of the target user. The facial feature information includes data information representing a facial orientation of the target user, and the eye feature information includes target coordinate information corresponding to eye positions of the target user.

The first determining module 330 is configured to determine whether the facial feature information matches preset feature information. The preset feature information includes data information representing that the facial orientation of the target user is directed toward a forward driving direction.

The second determining module 340 is configured to determine a target projection position according to a correspondence between the target coordinate information and a projection position of a display system in a case where the facial feature information matches the preset feature information.

The control module 350 is configured to control the display system to display information in an area corresponding to the target projection position.

Hereinafter, the apparatus for displaying information 300 will be described in detail as follows.

In some embodiments, the facial feature information may include multiple pieces of first coordinate information respectively corresponding to multiple first facial feature points, the preset feature information includes multiple pieces of second coordinate information respectively corresponding to multiple second facial feature points in a standard 3D face model, and the multiple first facial feature points correspond to the multiple second facial feature points one-to-one. Based on this, the above first determining module 330 may specifically include a mapping sub-module, the first determining sub-module and the second determining sub-module.

The mapping sub-module is configured to map the multiple pieces of first coordinate information respectively corresponding to the multiple first facial feature points into the standard 3D face model.

The first determining sub-module is configured to determine facial orientation angles of the target user according to the multiple pieces of first coordinate information and the multiple pieces of second coordinate information respectively corresponding to the multiple pieces of first coordinate information. The facial orientation angles include a roll angle, a pitch angle, and a yaw angle.

The second determining sub-module is configured to determine that the facial feature information matches the preset feature information in a case where the roll angle, the pitch angle, and the yaw angle are all less than a preset angle.

In some embodiments, the first determining sub-module may specifically include: a comparison unit, and a determining unit.

The comparison unit is configured to respectively compare the multiple pieces of first coordinate information with the multiple pieces of second coordinate information corresponding to the multiple pieces of first coordinate information.

The determining unit is configured to determine that the roll angle, the pitch angle, and the yaw angle are all less than the preset angle in a case where differences between the multiple pieces of first coordinate information and the multiple pieces of second coordinate information corresponding to the multiple pieces of first coordinate information are all less than a preset threshold value.

In some embodiments, the second determining module 340 may specifically include the third determining sub-module, and the fourth determining sub-module.

The third determining sub-module is configured to determine a target gear according to a correspondence between the target coordinate information and an adjustable gear of the display system.

The fourth determining sub-module is configured to determine a projection position corresponding to the target gear as the target projection position.

In some embodiments, the apparatus 300 for displaying information may further include the second acquisition module, and a fitting module.

The second acquisition module is configured to acquire a mapping relationship between the multiple adjustable gears and multiple pieces of eye position information before determining the target projection position according to the correspondence between the target coordinate information and the projection position of the display system.

The fitting module is configured to fit the mapping relationship through a linear regression algorithm to obtain a multiple linear regression equation. The multiple linear regression equation is used to represent a correspondence between eye position information and an adjustable gear of the display system.

In some embodiments, the target coordinate information may include left-eye coordinate information and right-eye coordinate information, and the third determining sub-module may specifically include a calculation unit.

The calculation unit is configured to substitute the left-eye coordinate information and the right-eye coordinate information into the multiple linear regression equation, respectively, to obtain the target gear by calculating.

In some embodiments, the second acquisition module may specifically include an acquisition sub-module, a detection sub-module, and a recording sub-module.

The acquisition sub-module is configured to acquire multiple facial images. The multiple facial images have different face position information.

The detection sub-module is configured to perform eye position detection on the multiple facial images respectively, to obtain the multiple pieces of eye position information.

The recording sub-module is configured to record the multiple adjustable gears corresponding to the multiple pieces of eye position information respectively, to obtain the mapping relationship between the multiple adjustable gears and the multiple pieces of eye position information.

In some embodiments, the apparatus 300 for displaying information may further include a receiving module and the third acquisition module.

The receiving module is configured to receive the first input of the target user for adjusting a gesture.

The third acquisition module is configured to acquire the facial image of the target user in response to the first input.

In the apparatus for displaying information according to the embodiments of the present disclosure, the facial orientation and the eye positions of the target user can be determined in real time by acquiring the facial image of the target user in real time and performing facial feature detection on the facial image. The change of the gesture of the target user will cause the change of the eye positions, and only in a case that the eye positions match the projection position of the display system, the target user can see clear and complete information. Therefore, the projection position of the display system can be adjusted timely according to the latest eye positions by determining the target projection position according to the correspondence between the target coordinate information and the projection position of the display system. Whether projection is required is determined intelligently by determining the target projection position in a case that the facial feature information matches the preset feature information, that is, in a case that the target user is directed toward a forward driving direction, thereby avoiding waste of resources. The target user in any gesture can see clear and complete information by controlling the display system to display information in the area corresponding to the target projection position. As described above, according to the embodiments of the present disclosure, the projection position of the display system can be automatically and timely adjusted according to the actual gesture of the target user, thereby improving the driving experience of the target user during the driving process and ensuring the driving safety of the target user.

Based on the method for displaying information provided by the above embodiments, an embodiment of the fourth aspect of the present disclosure further provides a specific embodiment of an electronic device. FIG. 4 illustrates a schematic diagram of the electronic device 400 provided by an embodiment of the present disclosure.

The electronic device 400 may include a processor 410 and a memory 420. The memory 420 is configured to store computer program instructions.

Specifically, the above processor 410 may include a central processing unit (CPU), or an Application Specific Integrated Circuit (ASIC), or may be configured to one or more integrated circuits for implementing the embodiments of the present disclosure.

The memory 420 may include mass storage for data or instructions. By way of example and not limitation, the memory 420 may include a Hard Disk Drive (HDD), a floppy disk drive, a flash memory, an optical disk, a magneto-optical disk, a magnetic tape, or a Universal Serial Bus (USB) drive, or a combination of two or more of these. Where appropriate, the memory 420 may include a removable or non-removable (or fixed) medium. Where appropriate, the memory 420 may be internal or external to the integrated gateway disaster recovery device. In a particular embodiment, memory 420 is a non-volatile solid state memory.

The memory may include a read-only memory (ROM), a random access memory (RAM), a magnetic disk storage media device, an optical storage media device, a flash memory device, an electrical, optical, or other physical/tangible memory storage devices. Thus, generally, the memory includes one or more tangible (non-transitory) computer readable storage medium (for example, memory devices) encoded with software including computer-executable instructions, and which, when executed (for example, by one or more processors), the operations described with reference to the method provided in accordance with the embodiment of the first aspect of the present disclosure can be performed.

The processor 410 is configured to implement any one of the methods for display information in the above embodiments by reading and executing computer program instructions stored in the memory 420.

In some embodiments, the electronic device 400 may further include a communication interface 430 and a bus 440. As illustrated in FIG. 4, the processor 410, the memory 420, and the communication interface 430 are connected through a bus 440 and communicate with each other.

The communication interface 430 is mainly configured to realize communication between modules, apparatuses, units, and/or devices in the embodiments of the present disclosure.

The bus 440 includes hardware, software, or both, which coupling components of the electronic device together with each other. By way of example and not limitation, the bus may include an accelerated graphics port (AGP) or other graphics bus, an enhanced industry standard architecture (EISA) bus, a front side bus (FSB), a hypertransport (HT) interconnect, an industry standard architecture (ISA) bus, an unlimited bandwidth interconnect, a low pin count (LPC) bus, a memory bus, a microchannel architecture (MCA) bus, a peripheral component interconnect (PCI) bus, a PCI-Express (PCI-X) bus, a serial advanced technology accessory (SATA) bus, a video electronics standards association local (VLB) bus, or other suitable bus, or a combination of two or more of these. Where appropriate, the bus 440 may include one or more buses. Although embodiments of the present disclosure describe and illustrate a particular bus, any suitable bus or interconnect is considered in the present disclosure.

In some embodiments, the electronic device 400 may be a mobile phone, a tablet computer, a laptop computer, a handheld computer, an in-vehicle electronic device, an ultra-mobile personal computer (UMPC), a netbook, a personal digital assistant (PDA), or the like.

The electronic device may perform the method for displaying information according to the embodiment of the first aspect of the present disclosure, thereby realizing the method and apparatus for displaying information described in combination with FIG. 1 to FIG. 3.

In addition, in combination with the method for displaying information in the above embodiments, an embodiment of the fourth aspect of the present disclosure can be implemented by providing a computer storage medium. The computer storage medium has computer program instructions stored thereon. The computer program instructions, when executed by the processor, implement any one of the methods for displaying information in the above embodiments.

An embodiment of the fifth aspect of the present disclosure further provides a computer program product that executes the method for displaying information according to the embodiment of the first aspect when instructions in the computer program product are executed by a processor.

An embodiment of the sixth aspect of the present disclosure further provides a computer program including computer program code that causes the computer to perform the method for displaying information according to the embodiment of the first aspect when the computer program code is executed on the computer.

In addition, an embodiment of the seventh aspect of the present disclosure further provides a vehicle. The vehicle may include at least one of: the apparatus for displaying information according to the any one embodiment of the second aspect; the electronic device according to the any one embodiment of the third aspect; the computer readable storage medium according to the any one embodiment of the fourth aspect; the computer program product according to the any one embodiment of the fifth aspect; or the computer program according to the any one embodiment of the sixth aspect. Elaborations are omitted herein

It should be noted that the explanation for the method and apparatus for displaying information in the foregoing embodiments is also applicable to the device, the computer readable storage medium, the computer program product, the computer program, and the vehicle in the embodiments of the present disclosure, which will not be described repeatedly herein.

All embodiments of the present disclosure may be implemented alone or in combination with other embodiments, which are regarded as the scope of protection of the present disclosure.

It should be understood that the present disclosure is not limited to the specific configurations and processes described above and illustrated in the figures. For the sake of conciseness, a detailed description of known methods is omitted here. In the above embodiments, several specific operations are described and illustrated by way of example. However, the processes of the method of the present disclosure is not limited to the specific operations described and illustrated, and those skilled in the art may make various changes, modifications, and additions, or change the order between operations upon appreciation of the spirit of the present disclosure.

The functional blocks illustrated in the structural block diagrams described above may be implemented as hardware, software, firmware, or a combination thereof. When implemented in hardware, it may be, for example, an electronic circuit, an application specific integrated circuit (ASIC), appropriate firmware, a plug-in, a function card, or the like. When implemented in software, elements of the present disclosure are programs or code segments that are used to perform desired tasks. The program or code segment may be stored in a machine readable medium or transmitted over a transmission medium or communication link by a data signal carried in a carrier wave. The "machine readable medium" may include any medium capable of storing or transmitting information. The example of machine readable medium includes an electronic circuit, a semiconductor memory device, a ROM, a flash memory, an erasable ROM (EROM), a floppy disk, a CD-ROM, an optical disk, a hard disk, a fiber optic media, a radio frequency (RF) link, and the like. The code segments may be downloaded via a computer network such as the Internet, an intranet, or the like.

It should also be noted that the exemplary embodiments mentioned in the present disclosure describe some methods or systems based on a series of operations or apparatuses. However, the present disclosure is not limited to the order of the above operations, that is, the operations may be performed in the order mentioned in the embodiments, the order may be different from the order in the embodiments, or several operations may be performed simultaneously.

Aspects of the present disclosure are described above with reference to flowcharts and/or block diagrams of methods, apparatuses (systems), and computer program products according to embodiments of the present disclosure. It should be understood that each block in the flowcharts and/or block diagrams, and combinations of blocks in the flowcharts and/or block diagrams, may be implemented by computer program instructions. These computer program instructions may be provided to a processor of a general purpose computer, a special purpose computer, or other programmable data processing apparatus to produce a machine, such that these instructions, executed via the processor of the computer or other programmable data processing apparatus, enable implementation of the functions/acts specified in one or more blocks of the flowcharts and/or block diagrams. Such processors may be, but are not limited to, general-purpose processors, special-purpose processors, application-specific processors, or field programmable logic circuits. It is also understood that each block in the block diagrams and/or flowcharts, and combinations of blocks in the block diagrams and/or flowcharts, may also be implemented by special-purpose hardware that performs the specified functions or acts, or may be implemented by combinations of special-purpose hardware and computer instructions.

The above is merely specific embodiments of the present disclosure, and those skilled in the art can clearly understand that for convenience and conciseness of the description, the specific working processes of the systems, modules, and units described above may refer to the corresponding processes in the above method embodiments, which will not be described repeatedly. It should be understood that the scope of protection of the present disclosure is not limited thereto, and any person skilled in the art can readily think of various equivalent modifications or substitutions within the technical scope of the present disclosure, and these modifications or substitutions should be covered within the scope of protection of the present disclosure.

**Claims**

1. A method for displaying information, comprising:

   acquiring a facial image of a target user, wherein the facial image comprises a facial image of the target user during driving;
   performing facial feature detection on the facial image to determine facial feature information and eye feature information of the target user, wherein the facial feature information comprises data information representing a facial orientation of the target user, and the eye feature information comprises target coordinate information corresponding to eye positions of the target user;
   determining whether the facial feature information matches preset feature information, wherein the preset feature information comprises data information representing that the facial orientation of the target user is directed toward a forward driving direction;
   in a case where the facial feature information matches the preset feature information, determining a target projection position according to a correspondence between the target coordinate information and a projection position of a display system; and
   controlling the display system to display information in an area corresponding to the target projection position.

2. The method of claim 1, wherein the facial feature information comprises a plurality of pieces of first coordinate information respectively corresponding to a plurality of first facial feature points, the preset feature information comprises a plurality of pieces of second coordinate information respectively corresponding to a plurality of second facial feature points in a standard three-dimensional (3D) face model, and the plurality of first facial feature points correspond to the plurality of second facial feature points one-to-one;

wherein determining whether the facial feature information matches the preset feature information comprises:

mapping the plurality of pieces of the first coordinate information respectively corresponding to the plurality of the first facial feature points into the standard 3D face model;

determining facial orientation angles of the target user according to the plurality of pieces of the first coordinate information and the plurality of pieces of the second coordinate information respectively corresponding to the plurality of pieces of the first coordinate information, wherein the facial orientation angles comprise a roll angle, a pitch angle, and a yaw angle; and

in a case where the roll angle, the pitch angle, and the yaw angle are all less than a preset angle, determining that the facial feature information matches the preset feature information.

3. The method of claim 2, wherein determining the facial orientation angles of the target user according to the plurality of pieces of the first coordinate information and the plurality of pieces of the second coordinate information respectively corresponding to the plurality of pieces of the first coordinate information comprises:

comparing the plurality of pieces of the first coordinate information with the plurality of pieces of the second coordinate information corresponding to the plurality of pieces of the first coordinate information, respectively; and

in a case where differences between the plurality of pieces of the first coordinate information and the plurality of pieces of the second coordinate information corresponding to the plurality of pieces of the first coordinate information are all less than a preset threshold value, determining that the roll angle, the pitch angle, and the yaw angle are all less than the preset angle.

4. The method of any one of claims 1 to 3, wherein determining the target projection position according to the correspondence between the target coordinate information and the projection position of the display system comprises:

determining a target gear according to a correspondence between the target coordinate information and an adjustable gear of the display system; and

determining a projection position corresponding to the target gear as the target projection position.

5. The method of claim 4, wherein before determining the target projection position according to the correspondence between the target coordinate information and the projection position of the display system, the method further comprises:

acquiring a mapping relationship between a plurality of adjustable gears and a plurality of pieces of eye position information; and

fitting the mapping relationship through a linear regression algorithm to obtain a multiple linear regression equation, wherein the multiple linear regression equation is used to represent a correspondence between the plurality of pieces of eye position information and the plurality of adjustable gears of the display system.

6. The method of claim 5, wherein the target coordinate information comprises left-eye coordinate information and right-eye coordinate information, and determining the target gear according to the correspondence between the target coordinate information and the adjustable gear of the display system comprises:

substituting the left-eye coordinate information and the right-eye coordinate information into the multiple linear regression equation, respectively, to obtain the target gear by calculating.

7. The method of claim 5 or 6, wherein acquiring the mapping relationship between the plurality of adjustable gears and the plurality of pieces of eye position information comprises:

acquiring a plurality of facial images, wherein the plurality of facial images have different face position information;

performing eye position detection on the plurality of facial images respectively, to obtain the plurality of pieces of eye position information; and

recording the plurality of adjustable gears corresponding to the plurality of pieces of eye position information respectively, to obtain the mapping relationship between the plurality of adjustable gears and the plurality of pieces of eye position information.

8. The method of any one of claims 1 to 7, wherein acquiring the facial image of the target user comprises:

receiving a first input of the target user for adjusting a gesture; and

in response to the first input, acquiring the facial image of the target user.

9. An apparatus for displaying information, comprising:

a first acquisition module, configured to acquire a facial image of a target user, wherein the facial image comprises a facial image of the target user during driving;

a detection module, configured to perform facial feature detection on the facial image to determine facial feature information and eye feature information of the target user, wherein the facial feature information comprises data information representing a facial orientation of the target user, and the eye feature information comprises target coordinate information corresponding to eye positions of the target user;

a first determining module, configured to determine whether the facial feature information matches preset feature information, wherein the preset feature information comprises data information representing that the facial orientation of the target user is directed toward a forward driving direction;

a second determining module, configured to determine a target projection position according to a correspondence between the target coordinate information and a projection position of a display system in a case where the facial feature information matches the preset feature information; and

a control module, configured to control the display system to display information in an area corresponding to the target projection position.

10. An electronic device, comprising: a processor and a memory, wherein the memory is configured to store computer program instructions, and the processor is configured to implement the method for displaying information of any one of claims 1 to 8 when executing the computer program instructions.

11. A computer readable storage medium, having stored thereon computer program instructions that, when executed by a processor, implement the method for displaying information of any one of claims 1 to 8.

12. A computer program product that, when instructions in the computer program product are executed by a processor, performs the method for displaying information of any one of claims 1 to 8.

13. A computer program, comprising computer program code that, when executed on a computer, causes the computer to perform the method for displaying information of any one of claims 1 to 8.

14. A vehicle, comprising at least one of:

the apparatus for displaying information of claim 9;
the electronic device of claim 10;
the computer readable storage medium of claim 11;
the computer program product of claim 12; or
the computer program of claim 13.

Acquire a facial image of a target user, wherein the facial image comprises a facial image of the target user during driving ⟿ S110

Perform facial feature detection on the facial image to determine facial feature information and eye feature information of the target user, wherein the facial feature information comprises data information representing a facial orientation of the target user, and the eye feature information comprises target coordinate information corresponding to eye positions of the target user ⟿ S120

Determine whether the facial feature information matches preset feature information, wherein the preset feature information comprises data information representing that the facial orientation of the target user is directed toward a forward driving direction ⟿ S130

In a case where the facial feature information matches the preset feature information, determine a target projection position according to a correspondence between the target coordinate information and a projection position of a display system ⟿ S140

Control the display system to display information in an area corresponding to the target projection position ⟿ S150

# FIG. 1

Receive the first input of the target user for adjusting a gesture — S210

In response to the first input, acquire the facial image of the target user — S220

Perform facial feature detection on the facial image to determine facial feature information and eye feature information of the target user, wherein the facial feature information comprises data information representing a facial orientation of the target user, and the eye feature information comprises target coordinate information corresponding to eye positions of the target user — S230

Determine whether the facial feature information matches preset feature information, wherein the preset feature information comprises data information representing that the facial orientation of the target user is directed toward a forward driving direction — S240

In a case where the facial feature information matches the preset feature information, determine a target projection position according to a correspondence between the target coordinate information and a projection position of a display system — S250

Control the display system to display information in an area corresponding to the target projection position — S260

**FIG. 2**

300

First acquisition module 〜 310

Detection module 〜 320

First determining module 〜 330

Second determining module 〜 340

Control module 〜 350

**FIG. 3**

400

410
Processor

420
Memory

430
Communication interface

Bus 440

**FIG. 4**

## INTERNATIONAL SEARCH REPORT

| | International application No. |
|---|---|
| | **PCT/CN2023/133713** |

**A. CLASSIFICATION OF SUBJECT MATTER**

G06F3/14(2006.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 面部, 脸部, hud, 抬头显示, 平视显示, 投影, 对应关系, 档位, 调整, 调节, 面朝, 面向, 前方, face, projection, gears, adjustment+

**C. DOCUMENTS CONSIDERED TO BE RELEVANT**

| Category* | Citation of document, with indication, where appropriate, of the relevant passages | Relevant to claim No. |
|---|---|---|
| Y | CN 111016785 A (HUIZHOU DESAY SV INTELLIGENT TRANSP TECHNOLOGY RESEARCH INSTITUTE CO., LTD.) 17 April 2020 (2020-04-17) description, paragraphs 24-49, and figures 1-4 | 1-14 |
| Y | CN 109167877 A (OPPO (CHONGQING) INTELLIGENT TECHNOLOGY CO., LTD.) 08 January 2019 (2019-01-08) description, paragraphs 35-78 and 106-107 | 1-14 |
| Y | CN 115330699 A (NEUSOFT CORP. et al.) 11 November 2022 (2022-11-11) description, paragraphs 78-116 | 4-7 |
| A | CN 110244778 A (BOE TECHNOLOGY GROUP CO., LTD.) 17 September 2019 (2019-09-17) entire document | 1-14 |
| A | CN 110703904 A (SHENZHEN JIANG CHENG TECHNOLOGY CO., LTD.) 17 January 2020 (2020-01-17) entire document | 1-14 |
| A | CN 113467600 A (APPOTRONICS CORP., LTD.) 01 October 2021 (2021-10-01) entire document | 1-14 |

☑ Further documents are listed in the continuation of Box C. ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 February 2024** | **18 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/133713** |

**C.     DOCUMENTS CONSIDERED TO BE RELEVANT**

| Category* | Citation of document, with indication, where appropriate, of the relevant passages | Relevant to claim No. |
|---|---|---|
| A | CN 114022565 A (ARCSOFT TECHNOLOGY CO., LTD.) 08 February 2022 (2022-02-08) entire document | 1-14 |
| A | CN 114258319 A (HUAWEI TECHNOLOGIES CO., LTD.) 29 March 2022 (2022-03-29) entire document | 1-14 |
| A | CN 115202476 A (ZEJING (XI'AN) AUTOMOTIVE ELECTRONIC CO., LTD.) 18 October 2022 (2022-10-18) entire document | 1-14 |
| A | US 2016247255 A1 (STAUDENMAIER, M. A. et al.) 25 August 2016 (2016-08-25) entire document | 1-14 |

## INTERNATIONAL SEARCH REPORT
### Information on patent family members

| International application No. |
| --- |
| **PCT/CN2023/133713** |

| Patent document cited in search report | | | Publication date (day/month/year) | Patent family member(s) | | | Publication date (day/month/year) |
| --- | --- | --- | --- | --- | --- | --- | --- |
| CN | 111016785 | A | 17 April 2020 | None | | | |
| CN | 109167877 | A | 08 January 2019 | None | | | |
| CN | 115330699 | A | 11 November 2022 | None | | | |
| CN | 110244778 | A | 17 September 2019 | None | | | |
| CN | 110703904 | A | 17 January 2020 | None | | | |
| CN | 113467600 | A | 01 October 2021 | None | | | |
| CN | 114022565 | A | 08 February 2022 | None | | | |
| CN | 114258319 | A | 29 March 2022 | None | | | |
| CN | 115202476 | A | 18 October 2022 | None | | | |
| US | 2016247255 | A1 | 25 August 2016 | WO | 2015044716 | A1 | 02 April 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211489042